# EUROPEAN PATENT SPECIFICATION

(11) **EP 2 898 589 B1**
(45) Date of publication and mention of the grant of the patent: **02.11.2016**
(21) Application number: 13801766.0
(22) Date of filing: 20.09.2013
(51) Int. Cl.: H02K 1/18, H02K 7/18

(54) **SYSTEM FOR LOCKING WIND TURBINE ROTATING ELECTRIC MACHINE SEGMENTS**
VERRIEGELUNGSSYSTEM FÜR SEGMENTE EINER ELEKTRISCHEN DREHMASCHINE EINER WINDTURBINE
SYSTÈME DE VERROUILLAGE DE SEGMENTS DE MACHINE ÉLECTRIQUE ROTATIFS D'ÉOLIENNE

(30) Priority: 20.09.2012 IT MI20121569
(43) Date of publication of application: 29.07.2015
(73) Proprietor: WINDFIN B.V., 2451 VW Leimuiden (NL)
(72) Inventor: PABST, Otto, I-39037 Rio Di Pusteria (IT)
(74) Representative: Eccetto, Mauro
(86) International application number: PCT/IB2013/058714
(87) International publication number: WO 2014/045247

(56) References cited:
- EP-A1- 2 187 506
- EP-A1- 2 315 339
- FR-A1- 2 333 145
- US-A- 3 708 707
- US-A1- 2012 074 798
- US-A1- 2012 133 145
- US-B1- 8 179 028

## Description

### TECHNICAL FIELD

The present invention relates to a system for locking wind turbine rotating electric machine segments.

### BACKGROUND ART

Wind turbines are known to employ rotating electric machines of the type in which a rotor rotates about an axis of rotation with respect to a stator. The rotor and the stator comprise respective, preferably tubular, supporting structures; and respective tubular active parts concentric with and facing one another, and fitted to the respective supporting structures. The active parts are separated by a tubular air gap. In this field, segmented active parts, i.e. active parts divided into a plurality of axial segments, are preferably employed to enable easy assembly, removal, and maintenance of the active parts of the electric machine. In fact, each active segment can be removed and, if necessary, replaced with a new one relatively easily. The tubular active parts are secured to the respective supporting structures, which have respective mating faces for the segments, and axial grooves for guiding and possibly fixing the respective segments in position. Patent Applications US 2010/0123318 A1 and US 2012/0074798 A1 describe two systems for locking segments - in this case, stator segments - to respective supporting structures.

Generally speaking, a segment locking system must ensure extremely precise connection of the segments to the respective supporting structure, so as to form an air gap of constant size both axially and tangentially. Moreover, the segment locking system should preferably be reversible and easy to handle from one end of the electric machine.

### DISCLOSURE OF THE INVENTION

It is an object of the present invention to provide a segment locking system that is precise, reliable, and easy to use.

According to the present invention, there is provided a system for locking wind turbine rotating electric machine segments, the system comprising a supporting structure extending about an axis of rotation and comprising a first mating face, and a plurality of first axial grooves, each communicating with the first mating face; a plurality of segments, each comprising a second mating face, and a second axial groove which is positioned facing and adjacent to one of the first grooves; and an expansion plug designed to engage the first and second groove; the first and second groove and the expansion plug being designed so that the expansion plug, when expanded, exerts a force with a radial component to lock the segment to the supporting structure along the respective second and first mating face.

By virtue of the present invention, the radial component provides for locking the segments against the supporting structure with considerable force, which is controllable easily from one end of the electric machine.

In a preferred embodiment of the present invention, each first groove has a first recess bounded by a first projection, and the second groove has a second recess bounded by a second projection; the expansion plug being designed to engage the first and second recess and to exert a force, having a radial component, on the first and second projection.

In other words, the first and second projection are pushed and compressed against each other by the expansion plug.

In a preferred embodiment of the present invention, the first and second groove are aligned along a radial axis; the expansion plug contacting the supporting structure and the segment along inclined faces sloping with respect to the radial axis.

The inclined contact faces make it possible to determine a radial component of the force transmitted by the expansion plug.

In a preferred embodiment of the present invention, each first projection has a first inclined face sloping with respect to the radial axis, and the expansion plug has a rib designed to slide along the first inclined face.

In other words, the expansion plug slides, with respect to the supporting structure, along the first inclined face as the expansion plug expands. And, as the expansion plug slides, the radial locking force is exerted on the first projection.

Preferably, each second projection has a second inclined face sloping with respect to the radial axis, and the expansion plug has a further rib designed to slide along the second inclined face.

Similarly, the expansion plug slides, with respect to the segment, along the second inclined face as the expansion plug expands. And, as the expansion plug slides, the radial locking force is exerted on the second projection, in the opposite direction to that of the force exerted on the first projection.

Preferably, each first groove has two first recesses bounded by respective first projections and located symmetrically on opposite sides of a radial axis.

Preferably, each second groove also has two second recesses bounded by respective second projections and located symmetrically on opposite sides of a radial axis.

The symmetrical configuration of the recesses provides for transmitting the forces evenly. And the inclined faces, generate opposite tangential forces which aid in centring the segment.

Preferably, the expansion plug has a cross section varying in size so as to be insertable loosely inside a first and second groove.

This way, the plug need not be forcefully inserted inside the first and second groove. Preferably, the expansion plug extends predominantly in an axial direction along the first and second groove.

In other words, the expansion plug extends the whole length of the first and second groove, and exerts axially evenly distributed pressure on the supporting structure and the segment.

Preferably, the expansion plug comprises two lateral bars, each comprising a first and second rib designed to engage a first and second recess.

The action of the lateral bars inside the first and second recesses provides for locking the segment.

Preferably, the expansion plug comprises a central bar fitted to the lateral bars so as to slide selectively along planes sloping with respect to the axial direction, and so that slide of the central bar in the axial direction with respect to the lateral bars produces a change in size of the expansion plug in a tangential direction.

In other words, the distance between the lateral bars is adjusted by sliding the central bar axially with respect to the lateral bars. Axial slide of the central bar is advantageously controllable from one end of the electric machine.

Preferably, the expansion plug comprises a reversible actuating mechanism for sliding the central bar in the axial direction with respect to the lateral bars.

The actuating mechanism is located at one end of the lateral bars.

In an alternative embodiment, the expansion plug is hollow.

This way, fluid can be fed into the expansion plug to cool the segment, which, as is known, forming part of the active part of the electric machine, produces considerable heat.

In the alternative embodiment, the first and second lateral bar are preferably positioned facing and opposite, and are connected by two permanently deformable walls.

This way, the distance between the lateral bars is adjusted by permanent deformation of the deformable walls.

Preferably, each deformable wall comprises two portions at an angle and forming an edge extending in the axial direction.

This design aids in controlling deformation of the deformable walls.

Preferably, the deformable walls form part of a tube, to which the lateral bars are fixed.

In one variation, the deformable walls are formed integrally with the lateral bars, and together with the lateral bars form a tubular structure.

This way, the whole expansion plug may be extruded.

### BRIEF DESCRIPTION OF THE DRAWINGS

A number of non-limiting embodiments of the present invention will be described by way of example with reference to the attached drawings, in which :
Figure 1 shows a partly sectioned side view, with parts removed for clarity, of a wind turbine to which the present invention may advantageously be applied;
Figure 2 shows a larger-scale cross section, with parts removed for clarity, of a rotating electric machine of the Figure 1 wind turbine;
Figure 3 shows a partly sectioned view in perspective, with parts removed for clarity, of a first embodiment of the locking system according to the present invention;
Figure 4 shows a partly exploded view in perspective, with parts removed for clarity, of an expansion plug in Figure 3;
Figure 5 shows a larger-scale cross section, with parts removed for clarity, of a detail in Figure 2;
Figure 6 shows a partly sectioned, smaller-scale plan view, with parts removed for clarity, of the Figure 3 detail;
Figure 7 shows a larger-scale plan view, with parts removed for clarity, of a detail in Figure 6;
Figure 8 shows a section, with parts removed for clarity, of the Figure 7 detail along line VIII-VIII;
Figure 9 shows a schematic cross section, with parts removed for clarity, of the locking system according to the present invention;
Figure 10 shows a partly sectioned view in perspective, with parts removed for clarity, of a locking system in accordance with a second embodiment of the present invention;
Figure 11 shows a larger-scale cross section, with parts removed for clarity, of the Figure 10 locking system;
Figure 12 shows a partly sectioned view in perspective, with parts removed for clarity, of a variation of the Figure 10 locking system;
Figure 13 shows a larger-scale cross section, with parts removed for clarity, of the Figure 12 locking system.

### BEST MODE FOR CARRYING OUT THE INVENTION

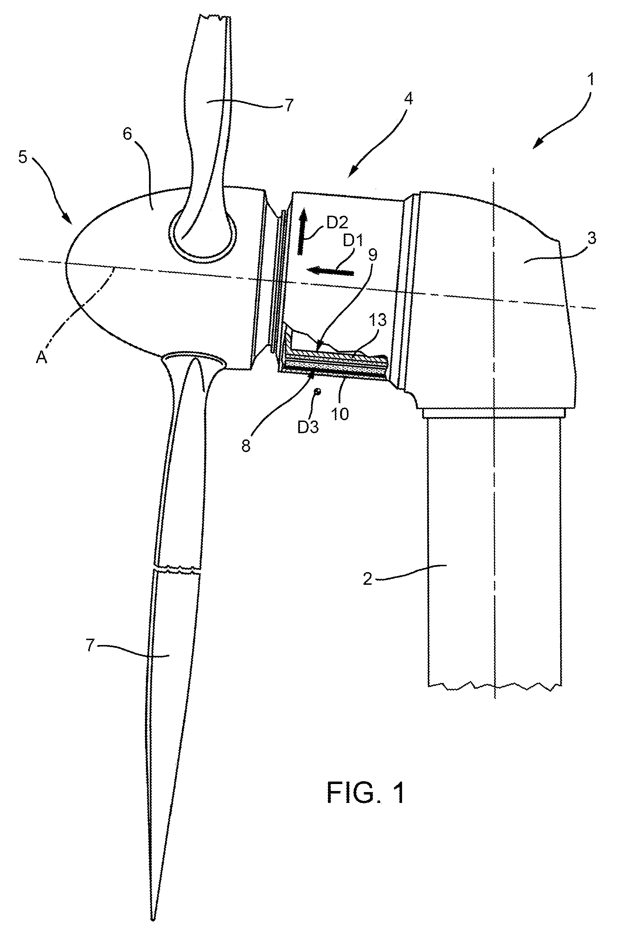

Number 1 in Figure 1 indicates as a whole a wind turbine for producing electric energy. Wind turbine 1 is a direct-drive type. In the example shown, wind turbine 1 comprises a vertical structure 2; a main frame 3 fitted in rotary manner to the top of vertical structure 2; a rotating electric machine 4; and a blade assembly 5 which rotates about an axis of rotation A. Rotating electric machine 4 is located between main frame 3 and blade assembly 5, and, in addition to producing electric energy, also serves to support blade assembly 5 and to transmit forces and moments induced by blade assembly 5 and rotating electric machine 4 to main frame 3.

In the example shown, main frame 3 is defined by a curved, tubular nacelle.

Blade assembly 5 comprises a hollow hub 6 connected to rotating electric machine 4; and a plurality of blades 7.

Rotating electric machine 4 extends about axis of rotation A, and is substantially tubular to form a passage between the hollow main frame 3 and hollow hub 6. Rotating electric machine 4 comprises a stator 8; and a rotor 9 located inside stator 8, and which rotates with respect to stator 8 about axis of rotation A.

With reference to axis of rotation A, there are defined an axial direction D1 parallel to axis of rotation A; a plurality of radial directions D2 perpendicular to axis of rotation A; and a plurality of tangential directions D3 crosswise to axis of rotation A and to radial directions D2.

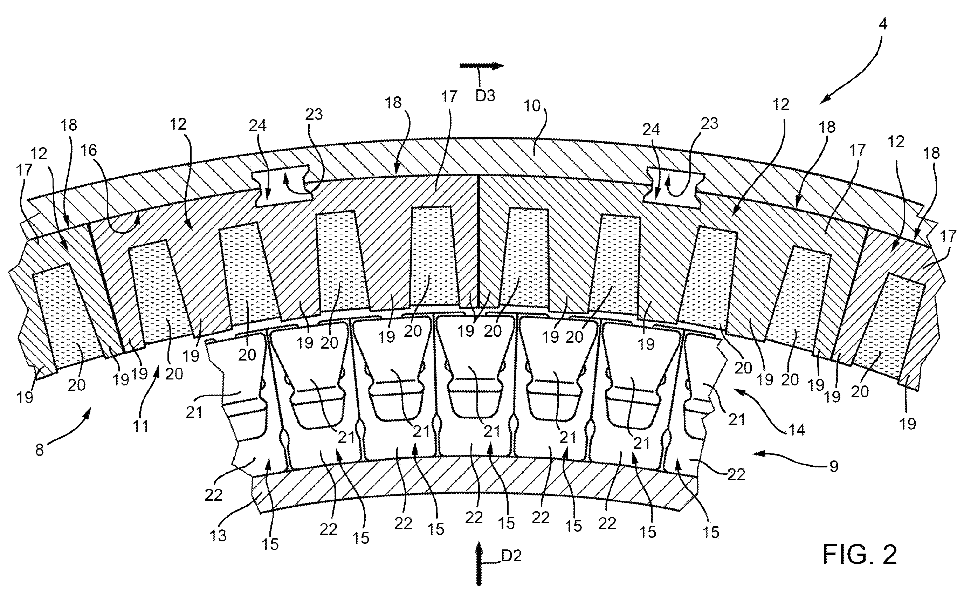

With reference to Figure 2, stator 8 comprises a tubular supporting structure 10; and a tubular active part 11 comprising a plurality of axial segments 12. Similarly, rotor 9 comprises a tubular supporting structure 13; and a tubular active part 14 comprising a plurality of axial segments 15. As shown in Figure 1, supporting structure 10 is connected to main frame 3, and supporting structure 13 is connected to blade assembly 5.

Supporting structure 10 has a mating face 16 - in the example shown, a cylindrical mating face - along which segments 12 rest. In the example shown, each segment 12 comprises a lamination pack 17, which is substantially prismatic in shape, extends mainly axially, and has a mating face 18 designed to rest on mating face 16, and a plurality of teeth 19 projecting on the opposite side to mating face 18; and a plurality of coils 20 wound about teeth 19 to define field poles.

More specifically, each segment 15 comprises an assembly 21 of magnetic guides and permanent magnets; and a gripper 22 for gripping assembly 21. Gripper 22 is positioned resting on and fixed to tubular structure 13.

The present description describes a system for locking segments 12 to tubular structure 10, though the same principal in general also applies to securing segments 15 to tubular structure 13.

The system for locking segments 12 is designed to fix each segment 12 to tubular structure 10 independently of the other segments 12. Accordingly, supporting structure 10 has a plurality of grooves 23, which extend inside the body of supporting structure 10, along mating face 16.

In the example shown, supporting structure 10 has a plurality of grooves 23 equal to the plurality of segments 12. And each segment 12 has a groove 24 designed to face and communicate with a respective groove 23.

In general, the plurality of grooves in each segment depends on the angular extension of the segment and other design parameters. So, each segment may comprise one or more grooves, and the supporting structure has a plurality of grooves equal to a whole multiple of the plurality of segments.

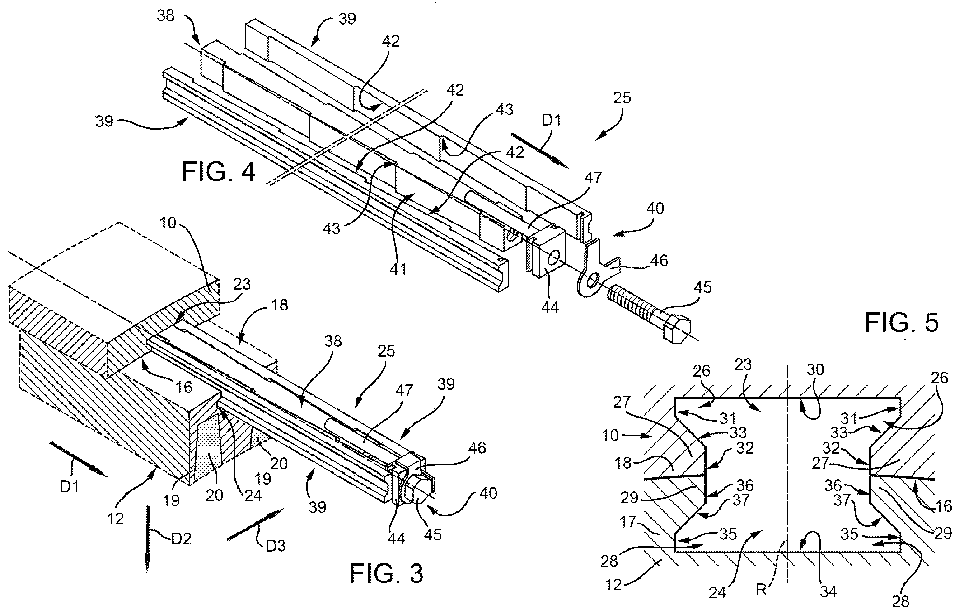

With reference to Figures 3 and 4, the locking system also comprises an expansion plug 25 designed to fit inside two facing grooves 23 and 24 to fix segment 12 to supporting structure 10. Expansion plug 25 is designed to expand, inside both grooves 23 and 24 and lock segment 12 with respect to supporting structure 10.

With reference to Figure 5, each pair of grooves 23 and 24 defines an hourglass-shaped cross section substantially symmetrical with respect to a radial axis R. More specifically, groove 23 has two recesses 26 formed respectively by two projections 27 projecting towards radial axis R. Similarly, groove 24 has two recesses 28 formed by two projections 29 projecting towards radial axis R.

Groove 23 has a bottom wall 30 substantially perpendicular to radial axis R; two facing lateral walls 31 adjacent to bottom wall 30 and substantially parallel to radial axis R; two facing lateral walls 32 adjacent to mating face 16 and substantially parallel to radial axis R; and two inclined walls 33 sloping with respect to radial axis R and converging towards the mouth of groove 23. Each inclined wall 33 connects a respective wall 31 to a respective wall 32.

Groove 24 is substantially specular with respect to groove 23, and has a bottom wall 34 substantially perpendicular to radial axis R; two facing lateral walls 35 adjacent to bottom wall 34 and substantially parallel to radial axis R; two facing lateral walls 36 adjacent to mating face 18 and substantially parallel to radial axis R; and two inclined walls 37 sloping with respect to radial axis R and converging towards the mouth of groove 24. Each inclined wall 37 connects a respective wall 35 to a respective wall 36.

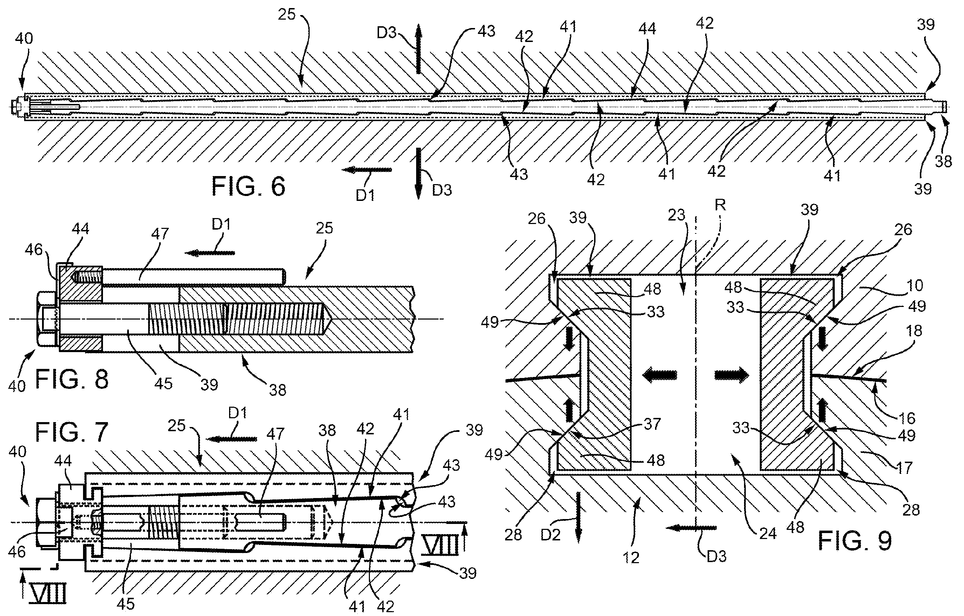

With reference to Figure 4, expansion plug 25 comprises a central bar 38; two lateral bars 39; and an actuating mechanism 40 for sliding central bar 38 with respect to the lateral bars in axial direction D1. Central bar 38 and lateral bars 39 contact one another along inclined faces 41 and 42, so that slide of the central bar in axial direction D1 parts lateral bars 39 in tangential direction D3, as shown more clearly in Figure 6.

With reference to Figure 6, central bar 38 and lateral bars 39 contact one another along a plurality of respective inclined faces 41 and 42, which succeed one another along the whole length of expansion plug 25, slope at the same angle, and alternate with steps 43. This way, a parting force can be transmitted relatively evenly to lateral bars 39 along the whole length of expansion plug 25.

With reference to Figure 7, actuating mechanism 40 preferably comprises a bridge 44 joint-connected directly to lateral bars 39; and a bolt 45, which rotates freely inside bridge 44 and is screwed to central bar 38. Central bar 38 is slid in axial direction D1 with respect to lateral bars 39 by screwing and unscrewing bolt 45.

Actuating mechanism 40 has an anti-back-off device 46 which, in the example shown, comprises a washer with two wings (Figure 4), one of which is bent onto the head of bolt 45 (Figures 3 and 8), and the other of which is bent onto bridge 44.

With reference to Figure 8, actuating mechanism 40 comprises a pin 47 screwed to bridge 44 and resting on an end portion of central bar 38 to position expansion plug 25.

With reference to Figure 9, lateral bars 39 of expansion plug 25 are designed to interact with supporting structure 10 and segment 12. Accordingly, each lateral bar 39 is designed to partly occupy one of recesses 26 of groove 23, and the recess 28, specular with respect to said recess 26, of groove 24. Each lateral bar 39 has two ribs 48 designed to engage recesses 26 and 28, and each rib 48 has an inclined face 49 designed to contact inclined face 33 or 37. In fact, expansion plug 25 is positioned only contacting inclined faces 33 and 37, and exchanges with supporting structure 10 and segment 12 forces perpendicular to inclined faces 33 and 37. The forces exchanged are divided into tangential forces FT, which assist in centring segment 12 with respect to radial axis R of groove 23; and radial forces FR, which press segment 12 against supporting structure 10, along respective mating surfaces 18 and 16.

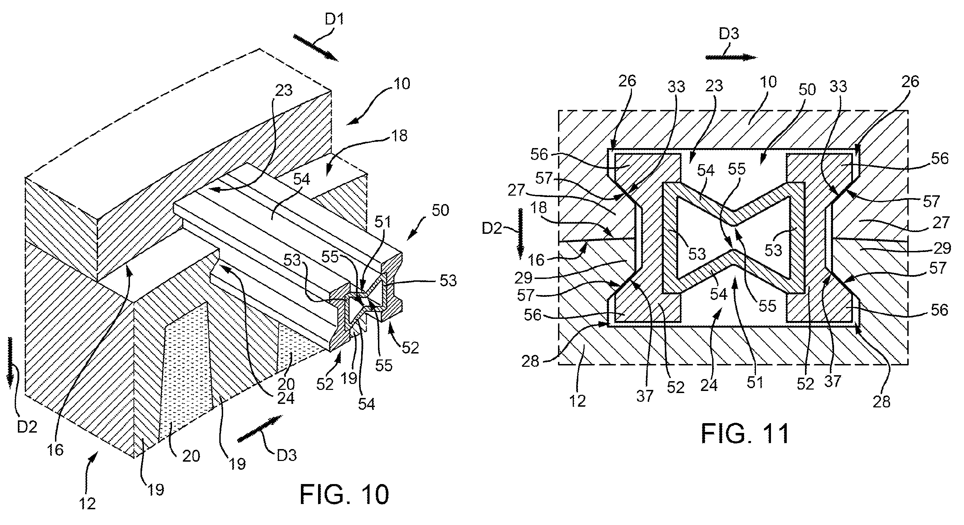

The locking system shown in Figure 10 employs an expansion plug 50, in lieu of expansion plug 25, to connect segment 12 to supporting structure 10.

Expansion plug 50 interacts with grooves 23 and 24 in the same way as described with reference to Figure 9, but differs from the Figure 3 expansion plug 25 in structure, by having no actuating mechanism of its own, and by being designed simply to deform permanently.

In the example shown, expansion plug 50 comprises a deformable tube 51; and two lateral bars 52 fixed on opposite sides of tube 51 and designed to interact with supporting structure 10 and segment 12. Tube 51 has two facing walls 53 fixed to respective lateral bars 52; and two facing walls 54. Each wall 54 is angled to form an edge 55 extending in axial direction D1. Preferably, the edges define the closest portions of walls 54.

Like lateral bars 39, each lateral bar 52 has two ribs 56 for engaging recesses 26 and 28, and each rib 56 has an inclined face 57 designed to contact inclined face 33 or 37.

In actual use, expansion plug 50 is expanded by permanent deformation of walls 54 - in the example shown, by increasing the angle formed by each angled wall. Tube 51 and, in the example shown, walls 54 may be deformed permanently by hydraulic or mechanical means.

Using hydraulic means, tube 51 is deformed by feeding a liquid inside tube 51, and increasing the pressure high enough to deform tube 51 and fix segment 12 to supporting structure 10.

Mechanical means are intended to mean expansion plugs or wedges (not shown) inserted inside tube 51 to straighten walls 54 of tube 51.

Expansion plug 50 is released by permanent deformation in the opposite direction to that for locking expansion plug 50. To release expansion plug 50, an expansion plug or wedge (not shown in the drawings) is inserted inside the gap between supporting structure 10 and wall 54, and an expansion plug or wedge (not shown in the drawings) is inserted inside the gap between segment 12 and the other wall 54.

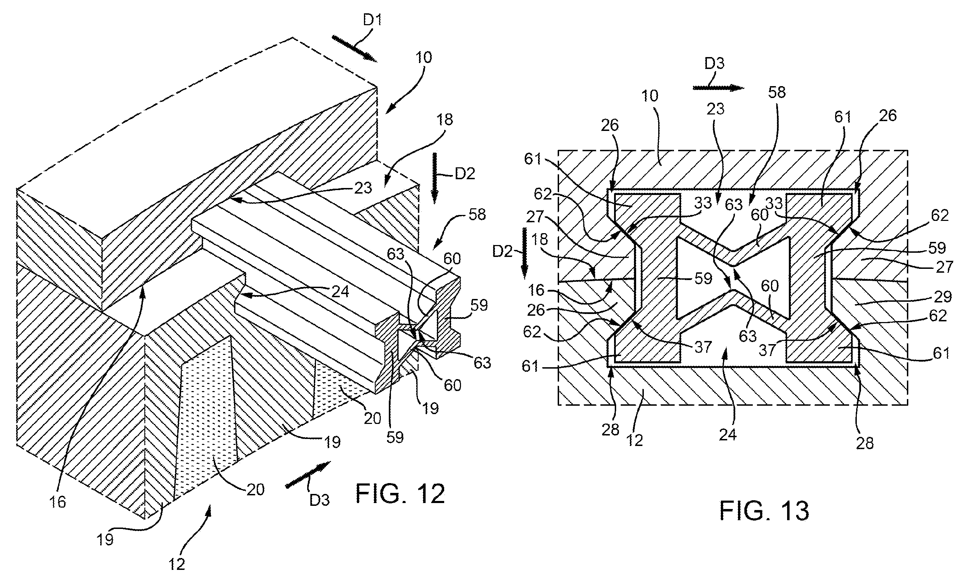

Number 58 in Figure 12 indicates a variation of expansion plug 50. In this variation, expansion plug 58 is defined by a hollow extruded section, and comprises two facing lateral bars 59, and two facing deformable walls 60 connecting lateral bars 59.

Like lateral bars 39 and 52, each lateral bar 59 has two ribs 61 designed to engage recesses 26 and 28, and each rib 61 has an inclined face 62 designed to contact inclined face 33 or 37.

Preferably, walls 60 are angled and form edges 63 as described for tube 51.

Expansion plug 58 is locked and released in the same way as described for expansion plug 50.

Expansion plugs 50 and 58 are hollow, and are connectable to a cooling gas or liquid source to cool segment 12.

Clearly, changes may be made to the locking system according to the present invention without, however, departing from the protective scope of the accompanying Claims.

## Claims

1. A system for locking wind turbine rotating electric machine segments, the system comprising a supporting structure (10) extending about an axis of rotation (A) and comprising a first mating face (16), and a plurality of first axial grooves (23), each communicating with the first mating face (16); a plurality of segments (12), each comprising a second mating face (18), and at least one second axial groove (24) which is positioned facing and adjacent to one of the first grooves (23); and an expansion plug (25; 50; 58) designed to engage the first and second groove (23, 24); the first and second groove (23, 24) and the expansion plug (25; 50; 58) being designed so that the expansion plug (25; 50; 58), when expanded, exerts a force with a radial component to lock the segment (12) to the supporting structure (10) along the respective second and first mating face (18, 16).

2. A system as claimed in Claim 1, wherein each first groove (23) has a first recess (26) bounded by a first projection (27), and the second groove (24) has a second recess (28) bounded by a second projection (29); the expansion plug (25; 50; 58) being designed to engage the first and second recess (26, 28) and to exert a force, having a radial component, on the first and second projection (27, 29).

3. A system as claimed in Claim 1 or 2, wherein the first and second groove (23, 24) are aligned along a radial axis (R); the expansion plug (25; 50; 58) contacting the supporting structure (10) and the segment (12) along inclined faces sloping with respect to the radial axis (R).

4. A system as claimed in Claim 3, wherein each first projection (27) has a first inclined face (33) sloping with respect to the radial axis (R), and the expansion plug (25; 50; 58) has a rib (48) designed to slide along the first inclined face (33).

5. A system as claimed in Claim 3 or 4, wherein each second projection (29) has a second inclined face (37) sloping with respect to the radial axis (R), and the expansion plug (25; 50; 58) has a further rib (48) designed to slide along the second inclined face (37).

6. A system as claimed in any one of the foregoing Claims, wherein each first groove (23) has two first recesses (26) bounded by respective first projections (27) and located symmetrically on opposite sides of a radial axis (R).

7. A system as claimed in any one of the foregoing Claims, wherein each second groove (24) has two second recesses (28) bounded by respective second projections (29) and located symmetrically on opposite sides of a radial axis (R).

8. A system as claimed in any one of the foregoing Claims, wherein the expansion plug (25; 50; 58) has a cross section varying in size so as to be insertable loosely inside a first and second groove (23; 24).

9. A system as claimed in any one of the foregoing Claims, wherein the expansion plug extends predominantly in an axial direction (D1) along the first and second groove (23, 24).

10. A system as claimed in Claims 6 and 7, wherein the expansion plug (25; 50; 58) comprises two lateral bars (39; 52; 59), each comprising a first and second rib (48; 56; 61) designed to engage a first and second recess (26; 28).

11. A system as claimed in Claim 10, wherein the expansion plug (25) comprises a central bar (38) fitted to the lateral bars (39) so as to slide selectively along planes sloping with respect to the axial direction (D1), and so that slide of the central bar (38) in the axial direction (D1) with respect to the lateral bars (39) produces a change in size of the expansion plug (25) in a tangential direction (D3).

12. A system as claimed in Claim 11, wherein the expansion plug (25) comprises a reversible actuating mechanism (40) for sliding the central bar (38) in the axial direction (D1) with respect to the lateral bars (39).

13. A system as claimed in Claim 8, wherein the expansion plug (50; 58) is hollow.

14. A system as claimed in Claim 13, wherein the first and second lateral bar (52; 59) are positioned facing and opposite, and are connected by two permanently deformable walls (54; 60).

15. A system as claimed in Claim 14, wherein each deformable wall (54; 60) comprises two portions at an angle and forming an edge (55; 63) extending in the axial direction (D1).

16. A system as claimed in Claim 14 or 15, wherein the deformable walls (54) form part of a tube (51), to which the lateral bars (52) are fixed.

17. A system as claimed in Claim 14 or 15, wherein the deformable walls (60) are formed integrally with the lateral bars (59), and together with the lateral bars (59) form a tubular structure.

## Patentansprüche

1. Verriegelungssystem für Segmente einer elektrischen Drehmaschine einer Windturbine, wobei das System umfasst: eine Haltestruktur (10), die sich um eine Drehachse (A) erstreckt und eine erste Passfläche (16) und eine Vielzahl erster axialer Nuten (23) umfasst, von denen jede mit der ersten Passfläche (16) in Verbindung steht; eine Vielzahl von Segmenten (12), von denen jedes eine zweite Passfläche (18) und wenigstens eine zweite axiale Nut (24), die gegenüberliegend und benachbart zu einer der ersten Nuten (23) positioniert ist, umfasst; und ein Verschlussstück (25; 50; 58), das konstruiert ist, um in die erste und zweite Nut (23, 24) einzugreifen; wobei die erste und zweite Nut (23, 24) und das Verschlussstück (25; 50; 58) derart konstruiert sind, dass das Verschlussstück (25; 50; 58), wenn es sich ausdehnt, eine Kraft mit einer Radialkomponente ausübt, um das Segment (12) entlang der jeweiligen ersten und zweiten Passfläche (18, 16) an der Haltestruktur (10) zu sperren.

2. System nach Anspruch 1, wobei jede erste Nut (23) eine erste Vertiefung (23) hat, die durch einen ersten Vorsprung (27) begrenzt wird, und die zweite Nut (24) eine zweite Vertiefung (28) hat, die von einem zweiten Vorsprung (29) begrenzt wird; wobei das Verschlussstück (25; 50; 58) konstruiert ist, um in die erste und zweite Vertiefung (26, 28) einzugreifen und eine Kraft mit einer Radialkomponente auf den ersten und zweiten Vorsprung (27, 29) auszuüben.

3. System nach Anspruch 1 oder 2, wobei die erste und zweite Nut (23, 24) entlang einer Radialachse (R) ausgerichtet sind; das Verschlussstück (25; 50; 58) die Haltestruktur (10) und das Segment (12) entlang geneigter Flächen, die in Bezug auf die Radialachse (R) abfallen, kontaktiert.

4. System nach Anspruch 3, wobei jeder erste Vorsprung (27) eine erste geneigte Fläche (33) hat, die in Bezug auf die Radialachse (R) abfällt, und das Verschlussstück (25; 50; 58) eine Rippe (48) hat, die konstruiert ist, um entlang der ersten geneigten Fläche (33) zu gleiten.

5. System nach Anspruch 3 oder 4, wobei jeder zweite Vorsprung (29) eine zweite geneigte Fläche (37) hat, die in Bezug auf die Radialachse (R) abfällt, und das Verschlussstück (25; 50; 58) eine weitere Rippe (48) hat, die konstruiert ist, um entlang der zweiten geneigten Fläche (37) zu gleiten.

6. System nach einem der vorhergehenden Ansprüche, wobei jede erste Nut (23) zwei erste Vertiefungen (26) hat, die durch jeweilige erste Vorsprünge (27) begrenzt werden und auf entgegengesetzten Seiten einer Radialachse (R) symmetrisch angeordnet sind.

7. System nach einem der vorhergehenden Ansprüche, wobei jede zweite Nut (24) zwei zweite Vertiefungen (28) hat, die durch jeweilige zweite Vorsprünge (29) begrenzt werden und auf entgegengesetzten Seiten einer Radialachse (R) symmetrisch angeordnet sind.

8. System nach einem der vorhergehenden Ansprüche, wobei das Verschlussstück (25; 50; 58) einen Querschnitt mit variierender Größe hat, um locker ins Innere einer ersten undzweiten Nut (23; 24) einsetzbar zu sein.

9. System nach einem der vorhergehenden Ansprüche, wobei das Verschlussstück sich vorwiegend in einer Axialrichtung (D1) entlang der ersten und zweiten Nut (23, 24) erstreckt.

10. System nach Anspruch 6 und 7, wobei das Verschlussstück (25; 50; 58) zwei seitliche Stangen (39; 52; 59) umfasst, von denen jede eine erste und zweite Rippe (48; 56; 61) umfasst, die konstruiert sind, um in eine erste und zweite Vertiefung (26; 28) einzugreifen.

11. System nach Anspruch 10, wobei das Verschlussstück (25) eine mittlere Stange (38) umfasst, die an die seitlichen Stangen (39) montiert ist, um selektiv zwischen Ebenen, die in Bezug auf die Axialrichtung (D1) abfallen, zu gleiten, und so dass das Gleiten der mittleren Stange (38) in der Axialrichtung (D1) in Bezug auf die seitlichen Stangen (39) eine Änderung der Größe des Verschlussstücks (25) in einer Tangentialrichtung (D3) erzeugt.

12. System nach Anspruch 11, wobei das Verschlussstück (25) einen reversiblen Betätigungsmechanismus (40) umfasst, um die mittlere Stange (38) in Bezug auf die seitlichen Stangen (39) in der Axialrichtung (D1) zu verschieben.

13. System nach Anspruch 8, wobei das Verschlussstück (50; 58) hohl ist.

14. System nach Anspruch 13, wobei die erste und zweite seitliche Stange (52, 59) einander gegenüberliegend und entgegengesetzt positioniert sind und durch zwei permanent verformbare Wände (54; 60) verbunden sind.

15. System nach Anspruch 14, wobei jede verformbare Wand (54; 60) zwei Abschnitte in einem Winkel umfasst und einen Rand (55; 63) bildet, der sich in der Axialrichtung erstreckt.

16. System nach Anspruch 14 oder 15, wobei die verformbaren Wände (54) einen Teil eines Rohrs (51) bilden, an dem die seitlichen Stangen (52) fixiert sind.

17. System nach Anspruch 14 oder 15, wobei die verformbaren Wände (60) integral mit den seitlichen Stangen (59) ausgebildet sind und zusammen mit den seitlichen Stangen (59) eine rohrförmige Struktur bilden.

## Revendications

1. Système de verrouillage de segments de machine électrique tournante d'éolienne, le système comprenant une structure de support (10) s'étendant autour d'un axe de rotation (A) et comprenant une première face d'accouplement (26), et une pluralité de premières gorges axiales (23), qui communique chacun avec la première face d'accouplement (16) ; une pluralité de segments (12}, qui comprennent chacun une seconde face d'accouplement (18), et au moins une deuxième gorge axiale (24) qui est positionnée en regard d'une des premières gorges (23), et de façon adjacente à celle-ci, et un bouchon d'expansion (25 ; 50 ; 58) adapté pour s'engager dans les première et deuxième gorges (23, 24), les première et deuxième gorges (23, 24) et le bouchon d'expansion (25 ; 50 ; 58) étant adaptés de telle sorte que le bouchon d'expansion (25 ; 50 ; 58), lorsqu'il est expansé, exerce une force ayant une composante radiale pour verrouiller le segment (12) à la structure de support (10) le long des deuxième et première faces d'accouplement respectif (18, 16).

2. Système selon la revendication 1, dans lequel chaque première gorge (23) comporte un premier évidement (26) délimitée par une première saillie (27) et la deuxième gorge (24) comporte un deuxième évidement (28) délimité par une deuxième saillie (29) ; le bouchon d'expansion (25 ; 50 ; 58) étant adapté pour s'engager dans les premier et deuxième évidements (26, 28) et exercer une force, ayant une composante radiale, sur les première et deuxième saillies (27, 29).

3. Système selon la revendication 1 ou 2, dans lequel les première et deuxième gorges (23, 24) sont alignées le long d'un axe radial (R) ; le bouchon d'expansion (25 ; 50 ; 58) étant en contact avec la structure de support (10) et le segment (12) le long de faces inclinées par rapport à l'axe radial (R).

4. Système selon la revendication 3, dans lequel chaque première saillie (27) comporte une première face inclinée (33) qui est inclinée par rapport à l'axe radial (R), et le bouchon d'expansion (25 ; 50 ; 58) comporte une nervure (48) destinée à coulisser le long de la première face inclinée (33).

5. Système selon la revendication 3 ou 4, dans lequel chaque deuxième saillie (29) comporte une deuxième surface inclinée (37) qui est inclinée par rapport à l'axe radial (R), et le bouchon d'expansion (25 ; 50 ; 58) comporte une autre nervure (48) destinée à coulisser le long de la deuxième face inclinée (37).

6. Système selon l'une quelconque des revendications précédentes, dans lequel chaque première gorge (23) comporte deux premiers évidements (26) délimités par des premières saillies respectives (27) et situés symétriquement sur des côtés opposés d'un axe radial (R).

7. Système selon l'une quelconque des revendications précédentes, dans lequel chaque deuxième gorge (24) comporte deux deuxièmes évidements (28) délimités par des deuxièmes saillies respectives (29) et situés symétriquement sur des côtés opposés d'un axe radial (R).

8. Système selon l'une quelconque des revendications précédentes, dans lequel le bouchon d'expansion (25 ; 50 ; 58) a une section transversale dont la dimension varie de façon à pouvoir être inséré sans serrage à l'intérieur de première et deuxième gorge {23 ; 24).

9. Système selon l'une quelconque des revendications précédentes, dans lequel le bouchon d'expansion s'étend essentiellement dans une direction axiale (D1) le long des première et deuxième gorges (23, 24).

10. Système selon les revendications 6 et 7, dans lequel le bouchon d'expansion (25 ; 50 ; 58) comprend deux barres latérales (39 ; 52 ; 59), comprenant chacune des première et deuxième nervures (48 ; 56 ; 61) adaptées pour s'engager dans des premier et deuxième évidements (26 ; 28).

11. Système selon la revendication 10, dans lequel le bouchon d'expansion (25) comprend une barre centrale (38) montée sur les barres latérales (39) de manière à coulisser de manière sélective le long de plans inclinés par rapport à la direction axiale (D1), et de telle sorte que le coulissement de la barre centrale (38) dans la direction axiale (D1) par rapport aux barres latérales (39) produit une modification de la dimension du bouchon d'expansion (25) dans une direction tangentielle (D3).

12. Système selon la revendication 11, dans lequel le bouchon d'expansion (25) comprend un mécanisme d'actionnement réversible (40) destiné à faire coulisser la barre centrale (38) dans la direction axiale (D1) par rapport aux barres latérales (39).

13. Système selon la revendication 8, dans lequel le bouchon d'expansion (50 ; 58) est creux.

14. Système selon la revendication 13, dans lequel les première et deuxième barres latérales (52 ; 59) sont positionnées face à face et de manière opposée, et sont reliées par deux parois (54 ; 60) déformables de façon permanente.

15. Système selon la revendication 14, dans lequel chaque paroi déformable (54 ; 60) comprend deux parties disposées angulairement et formant un bord (55 ; 63) qui s'étend dans la direction axiale (D1).

16. Système selon la revendication 14 ou 15, dans lequel les parois déformables (54) forment une partie d'un tube (51) auquel les barres latérales (52) sont fixées.

17. Système selon la revendication 14 ou 15, dans lequel les parois déformables (60) sont formées d'un seul tenant avec les barres latérales (59) et forment conjointement avec les barres latérales (59) une structure tubulaire.
